# DEMANDE DE BREVET EUROPEEN

(11) **EP 1 040 961 A1**
(43) Date de publication de la demande: **04.10.2000**
(21) Numéro de dépôt: 00400818.1
(22) Date de dépôt: 24.03.2000
(51) Int. Cl.: B60N 2/30, B60N 2/00

(54) **Siège repliable en accoudoir pour passager de véhicule**

(30) Priorité: 02.04.1999 FR 9904168
(71) Demandeur: MATRA AUTOMOBILE, 75116 Paris (FR)
(72) Inventeur: Berger, Thierry, 95540 Mery sur Oise (FR)
(74) Mandataire: David, Alain

(57) **Abrégé**

Siège passager de véhicule comportant une assise (22a), un dossier (22b) fixé à l'assise de façon pivotante et qui peut être rabattu sur cette assise autour d'un premier axe d'articulation, et un socle (26) pour supporter l'assise et destiné à être fixé de façon amovible à un plancher du véhicule. Selon l'invention, ce siège peut être déplacé entre une position normale d'utilisation dans laquelle le dossier (22b) est disposé sensiblement perpendiculairement à l'assise (22a) et une position de repli en accoudoir dans laquelle le dossier (22b) est tout d'abord rabattu sur son assise (22a) puis le siège est basculé autour d'un second axe d'articulation (44) parallèle à un axe central longitudinal du véhicule, de telle sorte que le siège ainsi replié se retrouve placé sensiblement au niveau de l'axe central longitudinal du véhicule contre un siège voisin de ce véhicule. De préférence, le siège voisin est le siège conducteur (20) du véhicule.

## Description

### Domaine de l'invention

La présente invention se rapporte au domaine général des transports de passagers tant individuels que collectifs au moyen de véhicules terrestres à moteurs (automobiles ou ferroviaires), d'engins aériens ou maritimes, et elle concerne plus particulièrement les sièges avant passagers de ces véhicules.

### Art antérieur

Dans la plupart des véhicules, notamment les véhicules automobiles, l'habitacle est délimité à l'avant par le poste de conduite comportant notamment la planche de bord et le tablier disposé sous cette planche de bord. En arrière de ce poste de conduite sont disposés côte à côte en général le siège conducteur et au moins un siège avant passager.

Lorsque l'on souhaite charger dans le véhicule des objets encombrants et notamment de grande longueur, la présence du siège passager peut alors constituer une gène importante. Dans ce cas, il est connu de procéder directement à l'enlèvement du siège qui, à cet effet, est fixé au plancher du véhicule de façon amovible.

Cette solution présente toutefois certains inconvénients. En effet, outre que cet enlèvement ne peut guère avoir lieu de façon inopinée, par exemple au cours d'un déplacement, car se pose alors le problème de l'entreposage temporaire du siège ôté, il convient de noter qu'un tel siège présente un poids relativement important et que sa dépose et son portage hors du véhicule est difficilement réalisable par une seule personne.

### Objet et définition de l'invention

La présente invention propose donc un siège passager qui pallie ces inconvénients et notamment permet des chargements d'objets encombrants sans la nécessité de sa dépose puis de son portage vers un lieu d'entreposage (un garage par exemple).

Dans ce but, l'invention concerne un siège passager de véhicule qui comporte une assise, un dossier fixé à l'assise de façon pivotante et qui peut être rabattu sur cette assise autour d'un premier axe d'articulation, et un socle pour supporter l'assise et destiné à être fixé de façon amovible à un plancher du véhicule. Selon l'invention, ce siège peut être déplacé entre une position normale d'utilisation dans laquelle le dossier est disposé sensiblement perpendiculairement à l'assise et une position de repli en accoudoir dans laquelle le dossier est tout d'abord rabattu sur son assise puis le siège est basculé autour d'un second axe d'articulation parallèle à un axe central longitudinal du véhicule, de telle sorte que le siège ainsi replié se retrouve placé sensiblement au niveau de l'axe central longitudinal du véhicule contre un siège voisin de ce véhicule dont il forme alors un accoudoir.

Cette configuration de rangement libère un espace de chargement dans la zone passager tout en constituant un arrêt de charge latéral et permet en outre à l'utilisateur du siège voisin (avantageusement le siège conducteur) de disposer d'un accoudoir.

Avantageusement, le socle est muni de pieds avant et arrière dont au moins deux premiers pieds collatéraux comportent chacun un moyen d'accrochage débrayable manuellement.

De préférence, les pieds sont verrouillables sur des anneaux fixés dans des ouvertures pratiquées dans le plancher du véhicule. Toutefois, dans un mode de réalisation particulier, des seconds pieds collatéraux, les plus proche de l'axe central longitudinal du véhicule, peuvent être fixés solidairement au plancher du véhicule. Par contre, que le socle soit fixé de façon amovible ou non, le second axe d'articulation traverse chacun desdits seconds pieds collatéraux.

Avantageusement, des glissières de réglage peuvent être disposées au niveau soit de l'assise soit du socle support de l'assise pour permettre un réglage latéral de cette assise par rapport auxdits pieds.

La présente invention concerne également tout véhicule équipé d'un tel siège passager.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en perspective de la partie avant de l'habitacle d'un véhicule automobile,
- la figure 2 montre la fixation du siège avant passager dans sa position terminale de repli selon un premier mode de réalisation de l'invention,
- les figures 3a, 3b et 3c sont des vues schématiques de face de la partie avant de l'habitacle de la figure 2 montrant le siège avant passager selon l'invention dans différentes positions,
- la figure 4 montre la fixation du siège avant passager dans sa position terminale de repli selon un deuxième mode de réalisation de l'invention,
- les figures 5a, 5b et 5c sont des vues schématiques de face de la partie avant de l'habitacle de la figure 4 montrant le siège avant passager selon l'invention dans trois positions successives,
- la figure 6 montre la fixation du siège avant passager dans sa position terminale de repli selon un troisième mode de réalisation de l'invention, et
- les figures 7a, 7b et 7c sont des vues schématiques de face de la partie avant de l'habitacle de la figure 6 montrant le siège avant passager selon l'invention dans trois positions successives.

### Description détaillée d'un mode de réalisation préférentiel

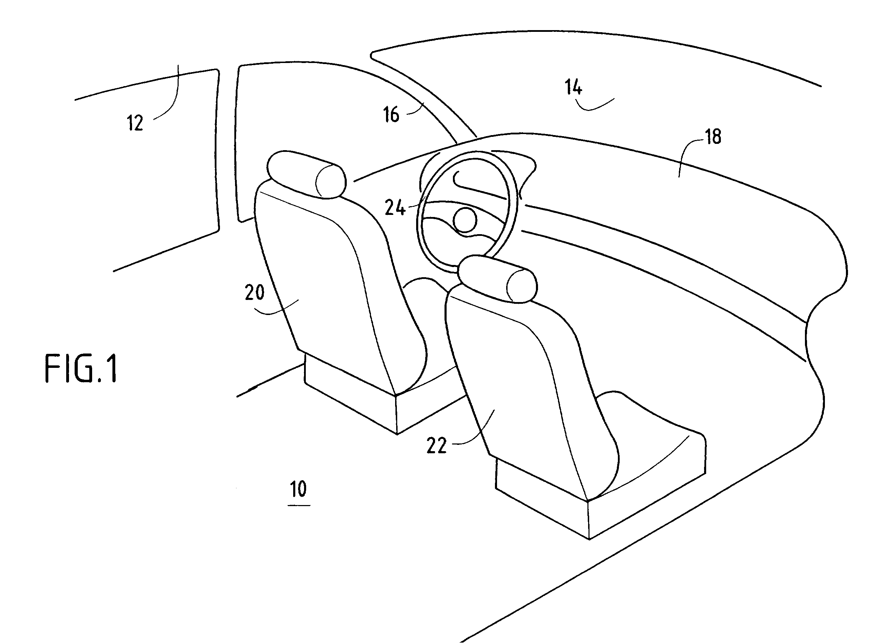

La partie avant de l'habitacle d'un véhicule automobile est illustrée en perpective de façon schématique à la figure 1.

Cet habitacle 10 est formé par plusieurs éléments de carrosserie dont on peut voir une partie de pavillon 12 qui s'étend jusqu'au pare-brise avant 14 et se poursuit de chaque coté de ce pare-brise par des montants 16. Sous ce pare-brise, qui délimite l'habitacle par l'avant, est disposée une planche de bord 18 comportant l'ensemble des instruments nécessaires à la conduite du véhicule (dont un volant de direction 24). Dans l'habitacle, en avant de la planche de bord sont disposés côte à côte dans leur position « d'utilisation », de part et d'autre de l'axe central longitudinal du véhicule, un siège conducteur 20 et un siège avant passager 22.

Chaque siège qui comporte classiquement une assise 20a, 22a et un dossier 20b, 22b peut aussi être muni d'un appui-tête à hauteur et inclinaison variables 20c, 22c. Classiquement, dans sa position normale d'utilisation, le dossier est disposé verticalement sensiblement perpendiculairement à l'assise alors en position horizontale. Le dossier qui est fixé à l'assise de façon pivotante, peut être rabattu ou replié sur cette assise par un pivotement d'environ 90° autour d'un premier axe d'articulation (non représenté) perpendiculaire à l'axe central longitudinal du véhicule.

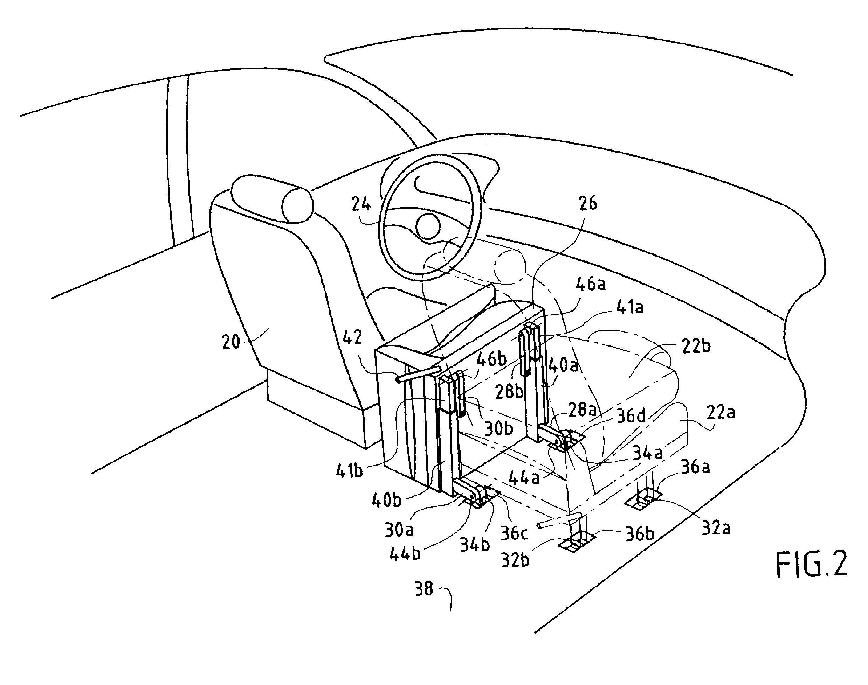

La structure du siège avant passager selon l'invention est montrée plus en détail sur la figure 2 qui en illustre un premier exemple préférentiel de réalisation.

Dans cet exemple, ce siège passager qui comporte son assise 22a, son dossier 22b articulé et éventuellement son appui-tête inclinable 22c est monté sur un socle (ou châssis 26 de support de l'assise) muni de pieds avant 28a, 28b et arrière 30a, 30b, chaque pied étant muni d'un moyen d'accrochage débrayable manuellement pour fixer de façon amovible le siège au plancher, par exemple un verrou désarmable d'accrochage sur des doigts ou anneaux transversaux 32a, 32b, 34a, 34b fixés dans des ouvertures correspondantes 36a, 36b, 36d, 36d du plancher du véhicule 38, tel que celui décrit dans la demande de brevet française de la demanderesse N°93 00792. Le déverrouillage des verrous d'accrochage est assuré classiquement au travers d'une tringlerie associée (non représentée) montée dans le socle 26 et commandée à partir d'un levier de manoeuvre manuel (ou manette 42).

Les deux premiers pieds collatéraux avant gauche 28a et arrière gauche 30a disposés sur un même axe longitudinal, parallèle à l'axe central longitudinal de l'habitacle et le plus proche de celui-ci, comportent chacun un second axe d'articulation 44a, 44b autour duquel le siège peut basculer en son entier. De même, les deux seconds pieds collatéraux avant droit 28b et arrière droit 30b disposés aussi sur un même axe longitudinal, également parallèle à l'axe central de l'habitacle mais le plus éloigné de celui-ci, comportent chacun un axe de pivotement 46a, 46b autour duquel ces deux pieds peuvent pivoter individuellement.

Des glissières de réglage formées classiquement par des montants 41a, 41b se déplaçant dans des rails 40a, 40b peuvent avantageusement être prévues au niveau de l'assise 22a ou du socle 26 pour permettre un coulissement latéral de l'assise du siège par rapport à ses pieds.

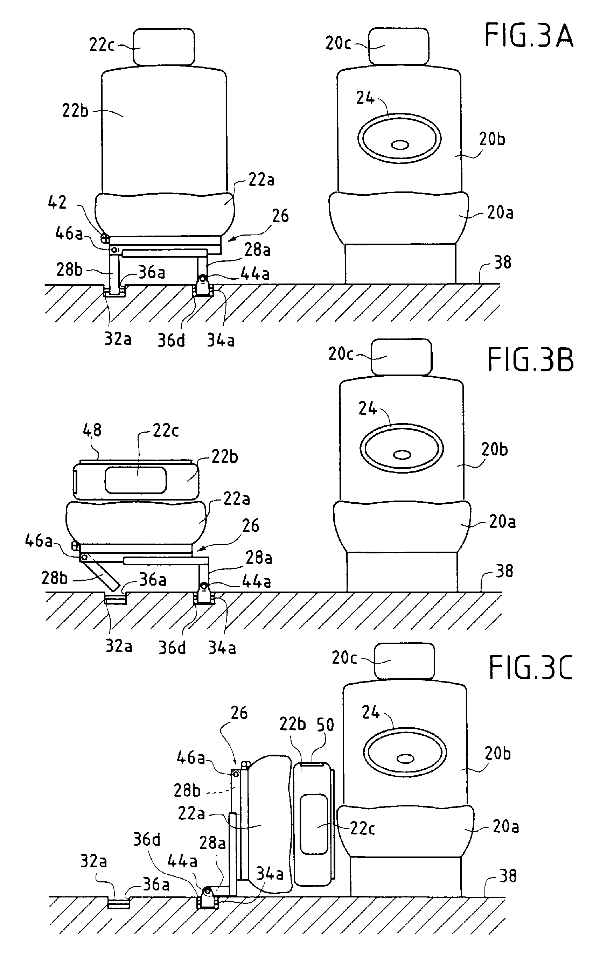

Le mode de mise en oeuvre de ce premier exemple de réalisation d'un siège avant passager selon l'invention est maintenant décrit de façon sommaire en regard des figures 3a à 3c qui représentent respectivement ce siège dans trois positions successives; une position normale d'utilisation, une position intermédiaire de déplacement et une position terminale de « repli en accoudoir» disposée au niveau de l'axe central longitudinal du véhicule. Sur ces figures, les éléments identiques portent bien entendu les mêmes références que celles définies précédemment.

Dans sa position initiale (figure 3a), ce siège est classiquement en position normale d'utilisation, dossier droit et assise fixée au plancher du véhicule par les moyens d'accrochage.

Sur la figure 3b, le siège avant passager occupe une position intermédiaire correspondant à une position dite « de tablette » et dans laquelle le dossier est rabattu sur l'assise autour de son premier axe d'articulation. Dans cette position, le dos du siège ainsi rabattu, et auquel est alors incorporé de préférence un élément rigide 48, peut faire avantageusement office de table d'écriture par exemple. Dans cette position, il se dégage également un espace au dessus du siège permettant la mise en place d'objets de grande longueur (des skis par exemple). Toutefois, la relative fragilité des matériaux composant le siège passager interdit en pratique le dépôt de pièces de très fort poids (meubles par exemple). Pour la mise en place de ces dernières, il est donc nécessaire de libérer le plus possible l'espace passager, notamment sur toute la longueur intérieure au bas de l'habitacle. Selon l'invention, ceci est réalisé en basculant le siège passager autour de son second axe d'articulation dans sa position terminale de repli dans laquelle ce siège passager est alors disposé dans l'axe central longitudinal du véhicule contre le siège conducteur, un coté renforcé 50 du dossier formant alors un accoudoir pour l'utilisateur du siège voisin, en l'espèce le conducteur (figure 3c). Ce basculement du siège passager est facilité par le déplacement préalable de ce siège sur ses glissières 40, 41 perpendiculairement à l'axe central longitudinal du véhicule et vers le coté externe de ce véhicule.

Le passage du siège de sa position initiale (première utilisation normale) à sa position terminale (troisième utilisation comme accoudoir) en passant par sa position intermédiaire (seconde utilisation comme tablette) s'effectue donc très simplement. En effet, il convient tout d'abord de procéder classiquement au rabattement du dossier du siège sur son assise, puis de déverrouiller les crochets de fixation au plancher des deux seconds pieds collatéraux (par action sur la manette 42) et enfin de faire pivoter le siège autour de ses deux premiers pieds collatéraux pour redresser le siège dans l'axe central de l'habitacle vers le siège conducteur. En fin de manipulation, le siège se trouve replié et basculé en son entier sur le coté contre le siège conducteur, libérant un espace supplémentaire dans l'habitacle, sans aucun portage ni manoeuvre laborieuse, et assurant une fonction complémentaire d'accoudoir pour le conducteur.

On notera que la présence de moyens d'accrochage sur chacun des pieds du siège permet en outre à l'utilisateur de retirer, si nécessaire, entièrement le siège de l'habitacle et ainsi d'augmenter encore notablement le volume de chargement.

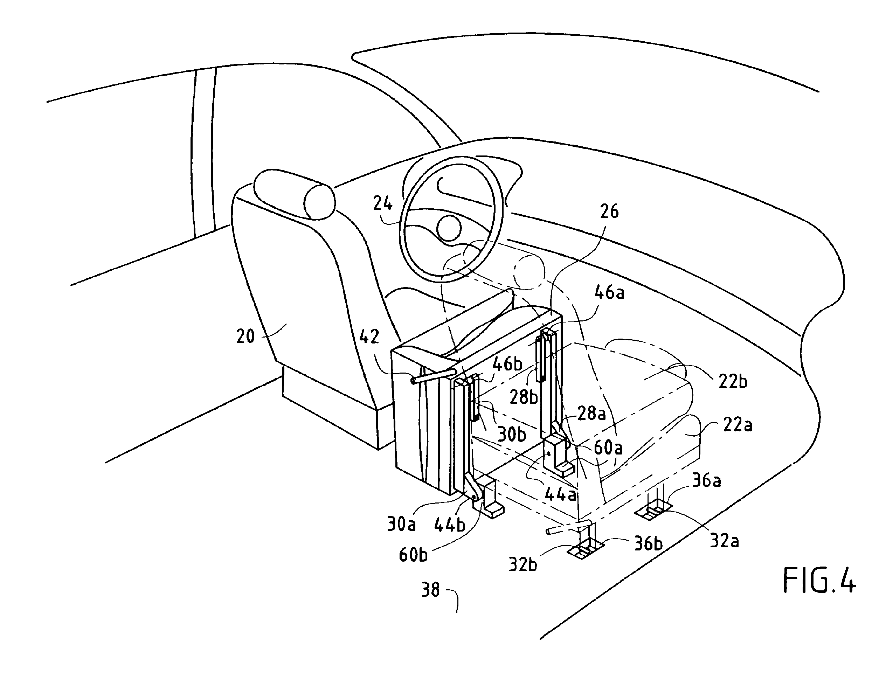

Lorsque cette fonction complémentaire n'est pas indispensable, il est possible de recourir à la structure de siège du second exemple de réalisation de l'invention de la figure 4. Dans cette configuration, les deux premiers pieds collatéraux 28a, 30a sont fixés chacun de façon pivotante (par l'intermédiaire des axes d'articulation 44a, 44b) à un support 60a, 60b (un support longitudinal unique pourrait aussi être envisagé) lui même fixé au plancher 38. Seuls les deux seconds pieds collatéraux 28b, 30b sont donc munis d'un système d'accrochage débrayable (par la manette 42) destiné à coopérer avec des anneaux 32a, 32b montés dans des ouvertures correspondantes 36a, 36b du plancher.

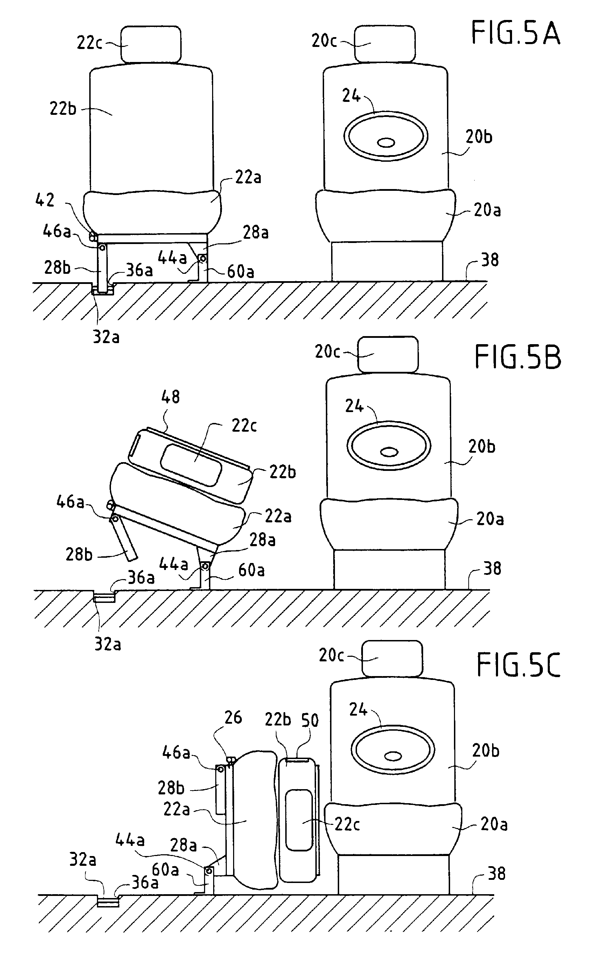

La transformation du siège de sa position d'utilisation normale à sa position terminale d'accoudoir est ici encore très simple comme le montrent les figures 5a à 5c. Tout d'abord, dans sa position d'utilisation normale (figure 5a), le siège est verrouillé au plancher par son système d'accrochage. Ensuite, dans la position intermédiaire de la figure 5b, le siège est en phase de basculement vers le siège conducteur, autour des seconds axes d'articulation longitudinale 44a, 44b, le dossier ayant été préalablement rabattu sur son assise autour du premier axe d'articulation et les seconds pieds collatéraux 28b, 30b venant après déverrouillage se replier naturellement sous l'assise 22a du siège. Enfin, dans sa position terminale (figure 5c), le basculement du siège est achevé et celui-ci se retrouve donc dans l'axe central du véhicule. On notera que le support est dimensionné de telle sorte que, une fois basculé, le siège passager repose pratiquement sur le plancher avec son coté renforcé 50 sensiblement parallèle à celui-ci. Le retour du siège dans sa position d'origine est réalisé simplement en reprenant en sens opposé les étapes précitées.

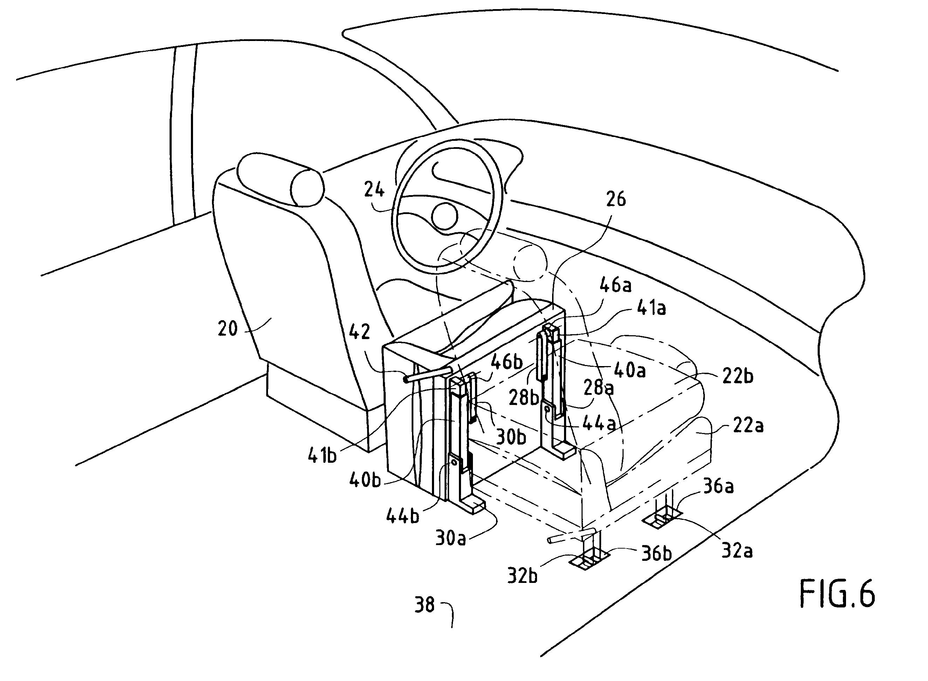

Un troisième exemple de réalisation de l'invention est illustré par la structure de siège de la figure 6.

Comme dans la réalisation précédente, seuls les deux seconds pieds collatéraux 28b, 30b sont munis d'un système d'accrochage débrayable manuellement et destiné à coopérer avec des anneaux 32a, 32b montés dans des ouvertures respectives 36a, 36b du plancher 38. Par contre, les deux premiers pieds collatéraux 28a, 30a sont directement fixés au plancher 38 et, afin de permettre la rotation du siège de sa position normale d'utilisation à sa position terminale d'accoudoir, le socle 26 est maintenant articulé autour des seconds axes d'articulation 44a, 44b parallèles à l'axe central du véhicule à une première extrémité de rails 40a, 40b dans lesquels peuvent venir coulisser deux montants 41a, 41b solidaires du socle 26. Les seconds pieds collatéraux 28b, 30b sont quant à eux articulés à une seconde extrémité de ces rails autour des axes 46a, 46b parallèles à l'axe central longitudinal du véhicule.

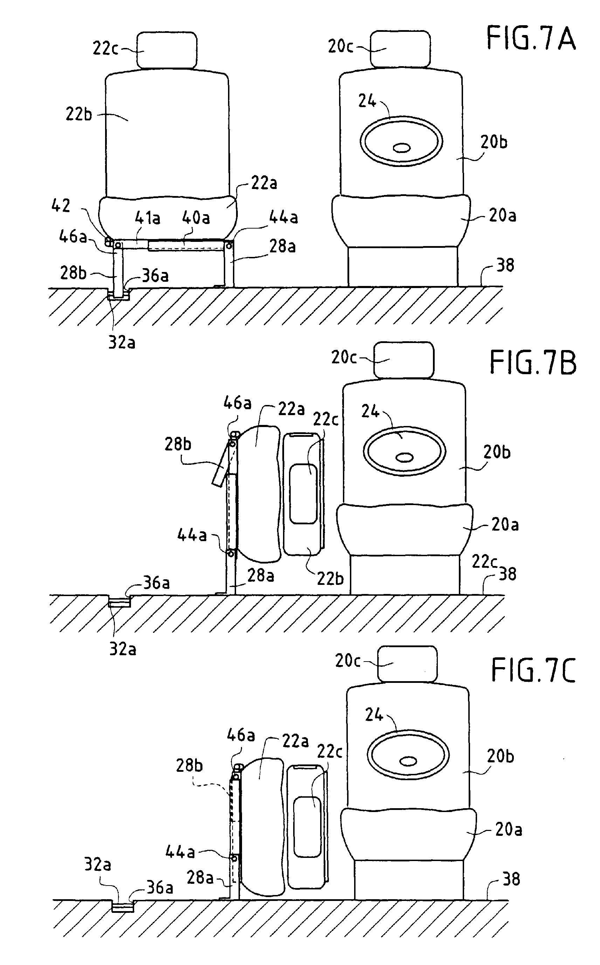

La transformation du siège de sa position d'utilisation normale à sa position terminale d'accoudoir est maintenant décrite en regard des figures 7a à 7c. Dans sa position d'utilisation normale (figure 7a), le siège est bien entendu verrouillé au plancher par son système d'accrochage comme dans les modes de réalisation précédents. Dans la position intermédiaire de la figure 7b, le siège est basculé à la vertical vers le siège conducteur, autour des seconds axes d'articulation longitudinale 44a, 44b, le dossier ayant été préalablement rabattu sur son assise autour du premier axe d'articulation. Dans cette position instable, les seconds pieds collatéraux 28b, 30b viennent comme précédemment se replier naturellement sous l'assise 22a du siège et les montants 41a, 41b des glissières du socle 26 peuvent alors coulisser automatiquement dans les rails correspondants 40a, 40b. A l'issue de ce coulissement, le siège se retrouve dans sa position terminale (figure 5c), replié et reposant sur le plancher 38 dans l'axe central du véhicule, le coté renforcé 50 du siège passager se retrouvant quant à lui sensiblement parallèle à ce plancher. On notera que le retour du siège dans sa position d'origine nécessite tout d'abord de soulever le siège ce qui peut présenter quelques difficultés pour l'utilisateur. Aussi, classiquement, il est prévu au niveau du socle 26, un vérin d'assistance ou tout autre système de ressort équivalent, qui après déverrouillage préalable (nécessaire à la libération de l'action du vérin) va déplacer et guider l'ensemble assise-dossier jusqu'à la position haute de la figure 7b où la rotation à l'horizontale peut alors être effectué manuellement par l'utilisateur.

Bien entendu, si l'invention a été décrite avantageusement en référence à l'habitacle d'un véhicule automobile, il est clair qu'elle est d'application plus générale et l'invention peut intéresser tout autre type de véhicule pour le transport individuel ou collectif notamment ferroviaire (train, métro, tramway, trolleybus), maritime (cabine de bateaux) ou aérien chaque fois qu'une utilisation optimisée des volumes intérieurs est envisagée. En outre, elle peut être appliquée aussi bien à un siège passager de première ligne (sièges avant à coté du siège conducteur comme décrit dans l'exemple illustré), deuxième ligne (sièges arrière), ou toute ligne suivante (autres sièges arrière dans les transports collectifs par exemple).

## Revendications

1. Siège passager de véhicule comportant:
. une assise (22a),
. un dossier (22b) fixé à l'assise de façon pivotante et qui peut être rabattu sur cette assise autour d'un premier axe d'articulation, et
. un socle (26) pour supporter l'assise et destiné à être fixé de façon amovible à un plancher du véhicule,
et caractérisé par le fait qu'il peut être déplacé entre une position normale d'utilisation dans laquelle le dossier (22b) est disposé sensiblement perpendiculairement à l'assise (22a) et une position de repli en accoudoir dans laquelle le dossier (22b) est tout d'abord rabattu sur son assise (22a) puis le siège est basculé autour d'un second axe d'articulation (44) parallèle à un axe central longitudinal du véhicule, de telle sorte que le siège ainsi replié se retrouve placé sensiblement au niveau de l'axe central longitudinal du véhicule contre un siège voisin de ce véhicule dont il forme alors un accoudoir.

2. Siège passager de véhicule selon la revendication 1, caractérisé en ce que ledit siège voisin est le siège conducteur (20) du véhicule.

3. Siège passager de véhicule selon la revendication 1 ou la revendication 2, caractérisé en ce que ledit socle est muni de pieds avant (28a, 28b) et arrière (30a, 30b) dont au moins deux premiers pieds collatéraux (28b, 30b) comportent chacun un moyen d'accrochage débrayable manuellement.

4. Siège passager de véhicule selon la revendication 3, caractérisé en ce que lesdits pieds sont verrouillables sur des anneaux (32a, 32b, 34a, 34b) fixés dans des ouvertures (36a, 36b, 36c, 36d) pratiquées dans le plancher du véhicule (38).

5. Siège passager de véhicule selon la revendication 3, caractérisé en ce que deux seconds pieds collatéraux (28a, 30a), les plus proche de l'axe central longitudinal du véhicule, sont fixés solidairement (60a, 60b) au plancher (38) du véhicule.

6. Siège passager de véhicule selon la revendication 3 ou la revendication 5, caractérisé en ce que ledit second axe d'articulation (44a, 44b) traverse chacun desdits seconds pieds collatéraux.

7. Siège passager de véhicule selon l'une quelconque des revendications 1 à 6, caractérisé en ce qu'il comporte en outre des glissières de réglage (40a, 40b ; 41a, 41b) disposées au niveau soit de l'assise (22a) soit du socle (26) support de l'assise pour permettre un coulissement latéral de cette assise par rapport auxdits pieds.

8. Véhicule comportant un siège passager de véhicule selon l'une quelconque des revendications 1 à 7.
